Europäisches Patentamt

European Patent Office

Office européen des brevets

(19)

(11) Numéro de publication: **0 011 041**
**B1**

(12) **FASCICULE DE BREVET EUROPEEN**

(45) Date de publication du fascicule de brevet: **16.09.81**

(21) Numéro de dépôt: **79420050.1**

(22) Date de dépôt: **17.10.79**

(51) Int. Cl.³: **B 60 P 3/34,** A 45 F 1/06,
E 04 F 10/04

(54) Auvent automatique pour véhicule utilitaire ou caravane.

(30) Priorité: **31.10.78 FR 7831633**

(43) Date de publication de la demande:
**14.05.80 Bulletin 80/10**

(45) Mention de la délivrance du brevet:
**16.09.81 Bulletin 81/37**

(84) Etats Contractants Désignés:
**AT BE CH DE GB IT LU NL SE**

(56) Documents cités:
**FR - A - 1 341 303**
**FR - A - 2 366 954**
**GB - A - 823 890**
**GB - A - 951 536**
**GB - A - 1 196 077**
**US - A - 3 040 756**
**US - A - 3 720 438**

(73) Titulaire: **Société Industrielle de ROCHEBONNE - SA**
**Route de Lamastre - BP 64 -**
**F-07300 Tournon (FR)**

(72) Inventeur: **Martinet, Dominique**
**Route de Lamastre - BP 64 -**
**F-07300 Tournon (FR)**

(74) Mandataire: **Schmitt, John**
**9 Rue Pizay**
**F-69001 - Lyon (FR)**

Courier Press, Leamington Spa, England.

Auvent automatique pour véhicule utilitaire ou caravane

L'invention concerne un auvent automatique pour véhicule utilitaire ou caravane comprenant une armature, habillée d'une toile d'auvent, articulée à l'un des angles supérieurs de véhicule ou de la caravane et susceptible d'être escamotée dans un coffre après repliage.

On connaît un auvent repliable pour véhicule décrit dans le brevet US—A— 3.730.196 et comprenant un support fixé sur le haut du véhicule, des branches articulées au support, un coffre de stockage de l'auvent fixé au véhicule et un étai articulé à une branche et au support; la toile étant fixée à l'intérieur du coffre. Cet auvent se déploie sur le côté du véhicule et, de par sa situation, n'abrite qu'une zone de 180°. D'autre part le coffre dans lequel il est replié est placé sur le toit du véhicule et offre une prise au vent. Quant à l'étanchéité elle est relativement précaire.

La présente invention a pour but d'apporter remède à ces inconvénients.

L'invention telle qu'elle est caractérisée dans les revendications permet de fournir un auvent simple, pratique et rationnel, intégré au véhicule ou à la caravane pour en augmenter d'une manière importante le volume habitable puisque l'auvent se déploie sur 270° et que des pans de toile retombent verticalement au sol pour compléter l'habitacle, la jonction de l'auvent déployé avec le véhicule étant rendue étanche. Lorsque l'auvent est replié, il s'escamote dans uns coffre situé contre la paroi arrière du véhicule et qui n'offre aucune prise au vent.

L'auvent selon l'invention comprenant, à la manière connue une armature constituée par plusieurs branches pivotantes s'étendant radialement et supportant une toile d'auvent, est caractérisé par le fait qu'il comporte, en combinaison: un moyen de verrouillage de l'armature déployée contre la paroi du véhicule associé à un dispositif d'étanchéité; un moyen de retenue du coffre en position ouverte et des moyens de tension de la toile d'auvent déployée.

Dans ce qui suit, l'invention est exposée plus en détail à l'aide de dessins représentant seulement un mode d'exécution.

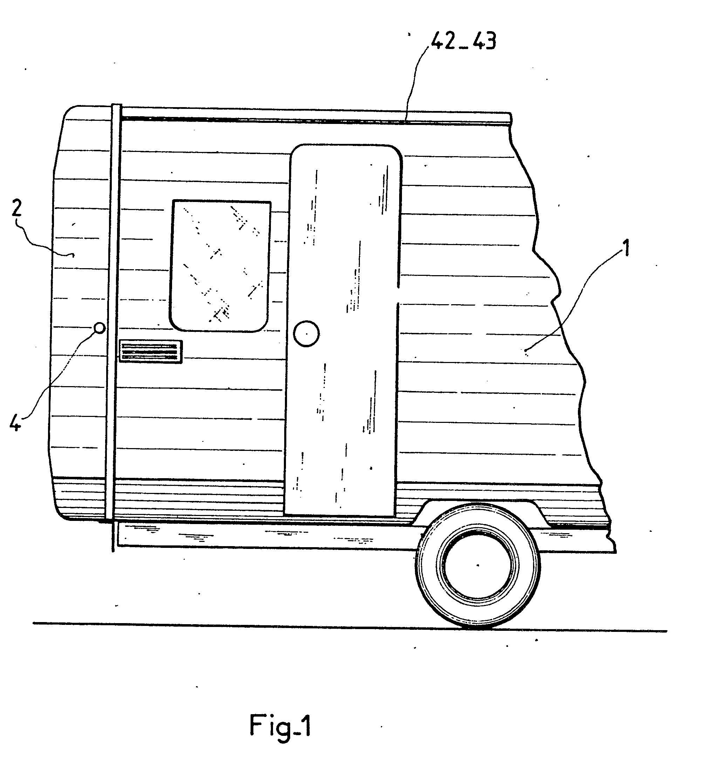

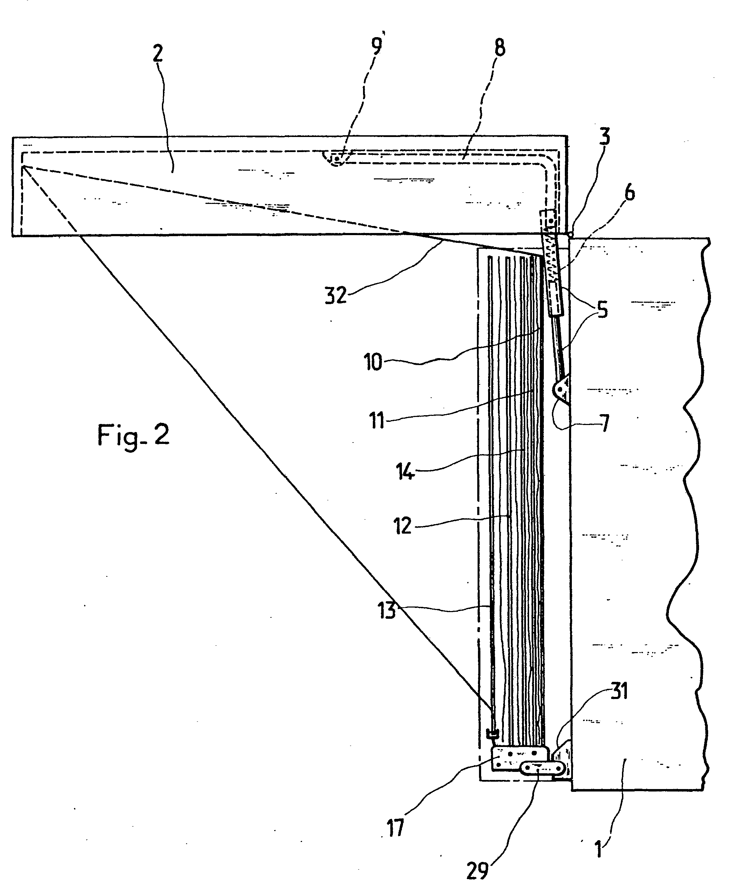

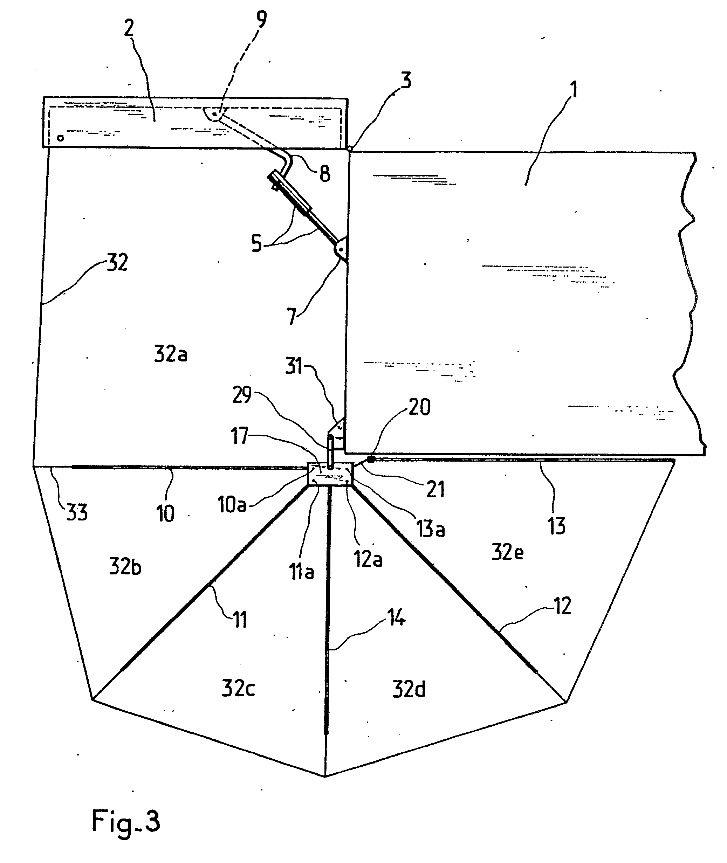

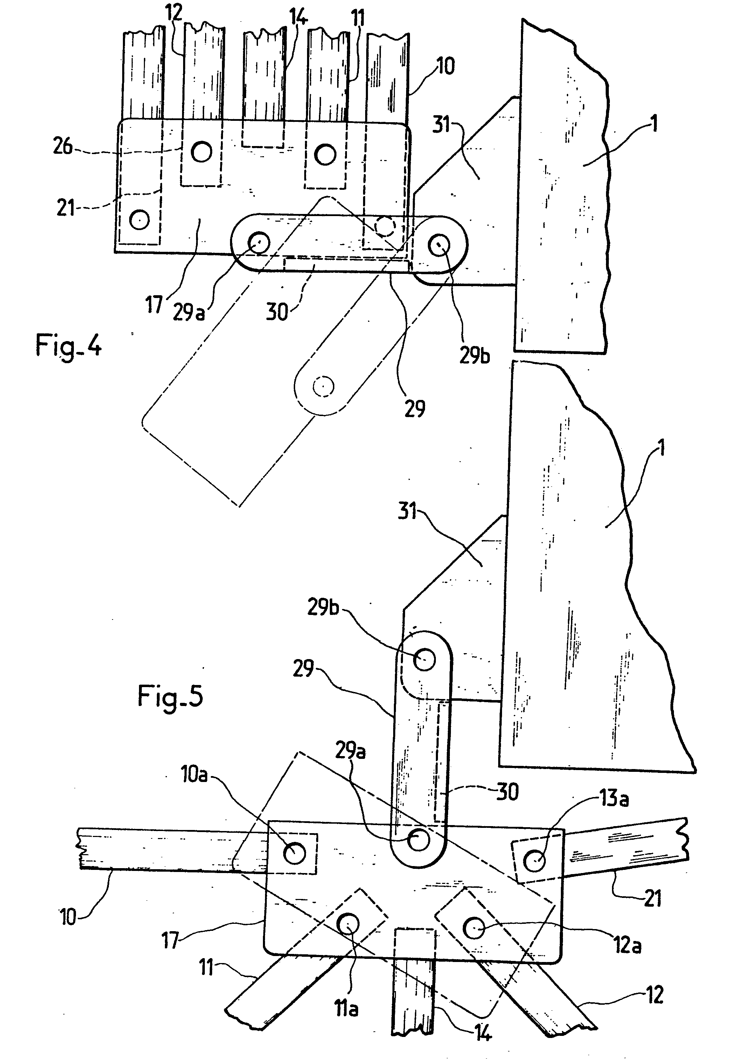

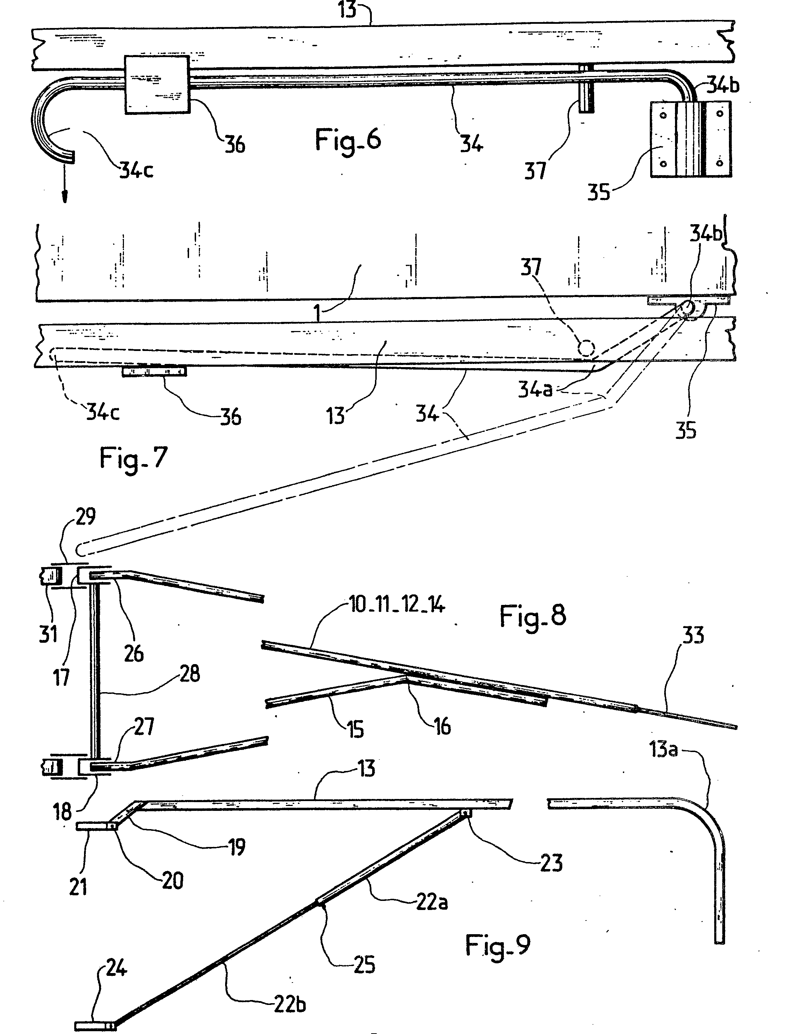

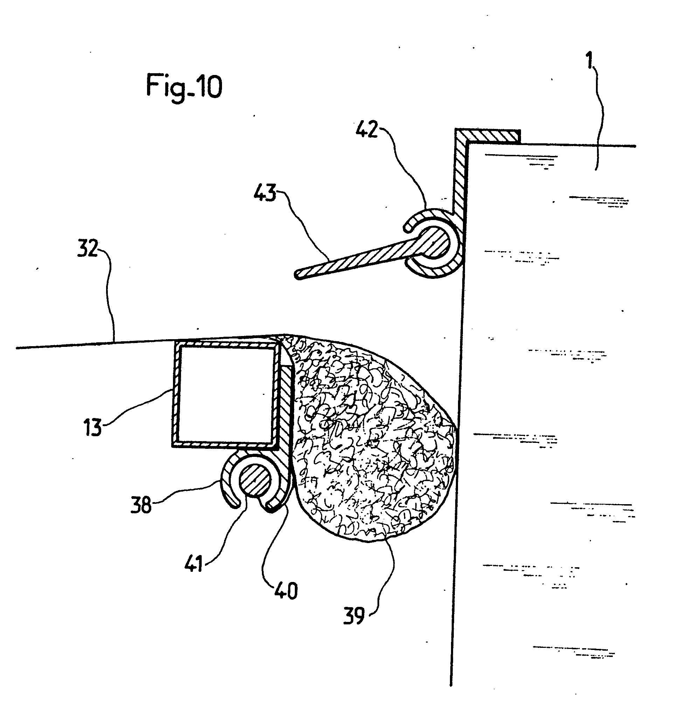

La figure 1 est une vue partielle de côté d'une caravane équipée du coffre abritant l'auvent replié; la figure 2 est une vue en plan par-dessus du coffre ouvert, découvrant l'auvent replié contre la paroi arrière de la caravane; la figure 3 est une vue en plan par-dessus de l'auvent déployé et verrouillé dans sa position finale contre la paroi latérale de la caravane; la figure 4 est une vue en plan pardessus de détail de la double chape d'articulation des branches de l'armature de l'auvent quand le coffre est fermé; la figure 5 est la vue en plan par-dessus de la même double chape quand l'auvent est déployé; la figure 6 est une vue en élévation du système de verrouillage de l'auvent à la caravane; la figure 7 est une vue en plan du système de verrouillage de la figure précédente; la figure 8 est une vue de côté d'une branche de l'armature; la figure 9 est une vue de côté de la branche d'accouplement de l'auvent à la caravane; la figure 10 est une vue en coupe transversale de la branche de la figure précédente, munie de son joint d'étanchéité.

Sur les figures 1, 2 et 3 on voit qu'une caravane 1 est équipée d'un coffre 2 qui règne sur toute la hauteur et toute la largeur de la face arrière du véhicule et s'y intègre d'une manière esthétique. Ce coffre est articulé à un des angles arrière par des charnières 3 de l'une de ses arêtes verticales et se ferme par tout moyen connu et approprié 4 contre l'autre de ladite face arrière.

L'ouverture de ce coffre est contrôlée par un compas visible figures 2 et 3, dont une branche 5 télescopique, munie d'un ressort 6, est articulée dans une chape 7 solidaire de la caravane, tandis que l'autre branche 8, en équerre, est articulée dans une chape 9 solidaire de la paroi intérieure du coffre 2.

La figure 2 montre que l'ouverture du coffre 2 laisse apparaître l'auvent replié contre la face arrière de la caravane.

Comme l'illustrent les figures 2 à 5 l'auvent est constitué par une armature métallique en tubes carrés par exemple, mais non exclusivement, comportant au moins cinq branches 10 — 11 — 12 — 13 et 14 disposées radialement et articulées dans des chapes doubles 17—18 (figure 8). Ces branches sont renforcées par des contre-fiches et quatre d'entre elles 10 — 11 — 12 — 13 sont articulées avec leurs renforts dans les chapes 17—18 superposées, tandis que la cinquième centrale 14 y est soudée. Les extrémités des branches constituent le sommet de l'armature de l'auvent relié à la caravane.

Les extrémités libres opposées de quatre de ces branches 10 — 11 — 12 et 14 sont équipées chacune d'une coulisse 33 schématisée figures 3 et 8, assurant la tension de la toile d'auvent 32 qui habille toute l'armature, tandis que l'extrémité de la branche 13 est prévue rabattue vers le bas à 90° avec un angle arrondi 13a (figure 9).

Ce sont les branches 10 — 11 — 12 et 14, dont l'une quelconque est montrée de côté sur la figure 8, qui sont renforcées chacune par une contre-fiche 15 laquelle est soudée à la branche aux deux tiers environ de sa longueur à partir du sommet; la contre-fiche et la branche forment un triangle dont l'angle au sommet est leur point de jonction 16.

La branche 13 est celle qui assure l'accouplement de l'auvent à la caravane, elle est montrée de côté sur la figure 9 et présente plusieurs particularités: outre le fait que son extrémité libre est recourbée vers le bas, elle comporte à l'extrémité opposée un décrochement 19 lequel se raccorde, par une articulation 20, à un patte horizontale 21; enfin sa contre-fiche est télescopique, la partie femelle 22a est articulée dans une chape 23 solidaire de la branche 13, tandis que la tige mâle 22b s'articule à une patte 24. Un cliquet 25 permet de verrouiller cette contrefiche.

Les extrémités des branches 10 — 11 — 12 et 14 et celles des contre-fiches 15, appelées à être reliées à la caravane par l'intermédiaire des chapes 17—18, sont légèrement coudées de manière à disposer d'une partie horizontale respectivement 26—27 (figure 8) destinée à être introduite, 26 dans la chape 17 et 27 dans la chape 18 de même que les pattes 21—24 de la branche 13 et de son renfort trouvent leurs places respectives dans les chapes 17 et 18.

Ces chapes 17 et 18 ont une forme rectangulaire et sont percées chacune de quatre trous recevant, celle 17 les axes d'articulation des extrémités 26 de branches 10 — 11 — 12 — 13 et celle 18 les axes d'articulation des extrémités 27 des contre-fiches précédentes, tandis que les extrémités de la branche 14 et de sa contre-fiche 15 sont soudées respectivement aux chapes 17 et 18 reliées entre elles par une entretoise 28 (figure 8).

Les figures 4 et 5 que montrent les détails de l'une des chapes 17 ou 18, permettent de voir que chacune de ces chapes est articulée, par un axe 29a, à une autre chape 29 dont la partie médiane 30 sert de butée. Chaque chape 29 s'articule elle-même, au moyen d'un axe 29b, à une autre chape 31 fixée à la face arrière de la caravane. Les deux chapes 29 sont accouplées par un élément de liaison indépendant de leurs butées 30.

La toile d'auvent 32 qui habille cette armature est fixée à la partie supérieure interne du coffre 2, à la caravane et à chacune des branches de l'armature (figures 2 et 3); elle retombe jusqu'au sol en pans verticaux assemblés entre eux par des fermetures à glissière et y est maintenue, en version déployée, par piquetage. Sa tension est assurée par le blocage de l'ouverture du coffre par le compas 5—8 et également par les coulisses 33 qui équipment les branches. Une légère pente est donnée à cette toile par la position oblique des branches de son armature.

Les figures 6 et 7 illustrent le système de verrouillage de l'auvent à la caravane. Lorsque l'armature est déployée c'est la branche 13 qui vient se placer parallèlement à la paroi latérale de la caravane. L'auvent est verrouillé au moyen d'une tige horizontale coudée à angle obtus dans le plan horizontal en 34a, puis à angle droit vers le bas en 34b pour s'articuler dans une charnière 35 vissée contre la paroi latérale de la caravane et, enfin, recourbée en cross 34c à l'autre extrémité pour permettre de la manoeuvrer. Cette tige est flexible dans les limites que lui permet l'élasticité de l'acier qui la constitue; la branche 13 qui vient en contact avec la caravane est munie d'une butée 36 et d'un doigt 37 solidaires de la partie inférieure de la branche et disposés sensiblement près de l'extrémité libre de ladite branche; la butée 36 est soudée contre la face intérieure de la branche 13, tandis que le doigt 37 est soudé sous la branche elllemême.

L'accouplement de l'auvent à la face latérale de la caravane est rendu étanche par le dispositif montré sur la figure 10 et dans lequel la branche 13 est garnie sur toute sa longueur d'un rail à profil spécial 38 fixé par tout moyen approprié de manière à épouser la face extérieure du tube de la branche et à se prolonger en partie sous ladite branche. La toile d'auvent 32 se termine au niveau de la branche 13 par un bourrelet souple 39 auquel est cousue une drisse 40—41 qui se glissse dans la gorge du profil 38. Pour compléter cette étanchéité la caravane est ellemême équipée d'un profil 42 épousant son angle supérieur et recevant dans sa gorge une gouttière longitudinale 43. Ce système d'étanchéité n'est donné qu'à titre d'exemple il pourrait être remplacé par d'autres profils selon les possibilités d'approvisionnement du constructeur.

Le fonctionnement du dispositif est très simple, on ouvre le coffre 2 en le faisant pivoter de 0 à 90° sur son axe vertical 3 d'articulation à la caravane (figure 2) ce qui permet d'accéder à l'auvent replié contre la paroi arrière du véhicule. On procède ensuite au déploiement de l'auvent dont la rotation s'effectue en trois temps: ler temps, (figure 4) pivotement autour de l'axe 29b, parallèle à l'axe vertical 3 de l'ensemble de chapes 29 pour positionner les branches de l'armature à l'extérieur du rangement et, à l'inverse, pour stocker l'auvent. Cette rotation est limitée à 90° par les butées 30 figures 4 et 5. Deuxième temps, (figure 5) rotation des chapes 17—18 autour de l'axe 29a parallèle également à l'axe vertical 3 de la paroi de la caravane, permettant la mise en place finale de l'ensemble à l'extérieur du rangement par l'intermédiaire des butées 30. Enfin troisième temps, (figures 3 et 5) rotation des branches 10 — 11 — 12 et 13 autour des axes 10a — 11a — 12a et 13a permettant le déploiement ou le repliage de la toile d'auvent.

Dès que l'auvent est déployé, on étire les coulisses 33 et on amène la branche 13 à l'horizontale au moyen du jeu télescopique de la contre-fiche 22a—22b bloquée dans cette position par le cliquet 25. Puis, lorsque la branche 13 vient au contact avec le dispositif de verrouillage, on agit sur la tige 34 qu'on écarte en la faisant pivoter dans la charnière 35; on ramène ensuite la tige 34 qu'on abaisse en forçant sur la crosse 34c de manière à lui faire franchir la butée 36 derrière laquelle elle se verrouille, tandis qu'elle retient contre la caravane le doigt 37 de ladite branche 13 (figures 6 et 7).

Comme le montre la figure 3, la mise en place des éléments de toit 32a à 32e de la toile d'auvent est obtenue par la position d'alignement des branches 5—8 du compas du coffre 2, tandis que la tension finale de la toile est réalisée par piquetage au sol.

La fermeture de l'auvent s'effectue par manoeuvres inverses: on déverrouille la branche 13 en abaissant la tige 34 en la faisant pivoter pour l'écarter et dégager la branche 13; on place cette branche en position basse en agissant sur le cliquet 25, puis on rentre les coulisses 33 des autres branches et le reste des opérations consiste à replier les panneaux de toile puis à rabattre l'auvent contre la caravane et à fermer le coffre 2.

Ce dispositif d'auvent escamotable dans un coffre peut être utilisé, non seulement sur tous les types de caravanes, de remorques, de camping-cars, mais également sur des bâtiments durs fixes ou mobiles.

**Revendications**

1. Auvent automatique pour véhicule utilitaire ou caravane (1) comprenant une armature articulée habillée d'une toile d'auvent (32), constituée par des branches (10) à (14) s'étendant radialement à partir de l'un des angles supérieurs du véhicule ou de la caravane (1), et susceptible d'être escamotée dans un coffre (2) articulé par une charnière (3) à l'angle opposé après repliage des branches (10) à (14) contre une des faces latérales dudit véhicule ou caravane (1), caractérisé par le fait que l'une (13) des branches de l'armature est verrouillée en position déployée de l'auvent contre une paroi latérale du véhicule ou de la caravane (1) au moyen d'une tige (34) qui se bloque entre deux butées (36) et (37) et que la jonction de ladite branche (13) avec le véhicule ou la caravane est rendue étanche au moyen d'un rail (38) et d'un bourrelet (39) équipant la toile (32) qui est tendue par l'action combinée d'un compas (5) (8) qui maintient le coffre (2) ouvert, de pans verticaux de la toile (32) piquetés au sol et de parties à coulisse (33) à l'extrémité de chacune des branches (10) à (14).

2. Auvent suivant la revendication 1, caractérisé par le fait que la tige (34) qui verrouille la branche (13) à la paroi du véhicule ou de la caravane (1) est articulée dans une charnière (35) solidaire de ladite paroi, tandis que la première butée (36) et un doigt (37) qui sert de deuxième butée chevauchent la tige (34) et sont soudés à la face inférieure de la branche verrouillable (13) de l'armature.

3. Auvent suivant la revendication 1, caractérisé par le fait que le rail (38) habille la branche (13) de l'armature et est associé à une drisse (40)(41) cousue au bourrelet souple (39) équipant la toile d'auvent, tandis qu'un ensemble rail (42) et gouttière (43) équipant le bord supérieur latéral du véhicule ou de la caravane (1) complète l'étanchéité de la jonction.

4. Auvent suivant la revendication 1, caractérisé par le fait que le compas qui maintient ouvert le coffre (2) comporte une branche en équerre (8) articulée à une chape (9) solidaire de l'intérieur du coffre (2) et une autre branche télescopique (5) articulée à une chape (7) solidaire de la paroi latérale du véhicule ou de la caravane (1) constituant ainsi un moyen de tension de la toile (32).

5. Auvent suivant la revendication 1, caractérisé par le fait que la toile d'auvent (32) fixée à chacune des branches (10) à (14) et qui retombe en pans verticaux couvre une surface inscrite dans un arc de cercle de 270°.

6. Auvent suivant la revendication 1, caractérisé par le fait que les branches (10) à (14) de l'armature sont articulées et/ou soudées dans des chapes (17)(18) accouplées par une tige (28) et reliées à d'autres chapes (31) solidaires du véhicule ou de la caravane (1) par des chapes (29) dont les parties médianes (30) servent de butées aux chapes (17)(18).

7. Auvent suivant la revendication 1, caractérisé par le fait que la branche verrouillable (13) de l'armature est constituée par deux parties articulées dont l'une est accouplée à une chape (17), tandis que l'autre est supportée par une contre-fiche télescopique (22a)(22b) à cliquet (25) accouplée à une autre chape (18) par une pièce articulée (24).

**Claims**

1. Self-acting hood for utility vehicle or caravan (1) comprising a linked framework covered with a hood canvas (32), made up arms (10) to (14) extending radially from one of the upper angles of the vehicle or the caravan (1) and susceptible of being retracted into a boot (2) linked by a hinge (3) at the opposite angle after closing of the arms (10) to (14) against one of the side faces of said vehicle or caravan (1), characterized in that one (13) of the framework arms is bolted in unfolded position of the hood against a side wall of the vehicle or the caravan (1) by means of a rod (34) which cataches between two thrusts (36) and (37) and that the joining of said arm (13) with the vehicle or the caravan is rendered water-tight by means of a rail (38) and a shoulder (39) fitting out the canvas (32) which is stretched through the combined action of a spring-dividers (5) (8) which maintains the boot (2) open, of vertical flaps of the canvas (32) staked on the ground and of parts with slideways (33) at the end of each one of the arms (10) to (14).

2. Hood according to claim 1, characterized in that the rod (34) which bolts the arm (13) against the wall of the vehicle or the caravan (1) is linked into a hinge (35) integral with said wall, whereas the first thrust (36) and a finger (37) which is used as second thrust, overlap the rod (34) and are welded to the lower face of the bolting arm (13) of the framework.

3. Hood according to claim 1, characterized in that the rail (38) gives clothing to the arm (13) of the framework and is associated to a halyard (40),(41) sewn to the softshoulder (39) fitting out the hood canvas, whereas a rail (42) and gutter (43) set fitting out the upper lateral edge of the vehicle or the caravan (1) completes the water-tightness of the junction.

4. Hood according to claim 1, characterized in that the spring dividers which maintains the boot (2) open contains a square-type arm (8) linked to a fork-joint (9) integral with the innerside of the boot (2) and another telescopic arm (5) linked to a fork-joint (7) integral with the side wall of the vehicle or the caravan (1) thus forming a means of tension of the canvas (32).

5. Hood according to claim 1, characterized in that the hood canvas (32) fastened to each of the arms (10) to (14) and which hangs down into vertical flaps covers an area inscribed into an arc of circle of 270°.

6. Hood according to claim 1, characterized in that the arms (10) to (14) of the framework are linked and/or welded into fork-joints (17),(18) coupled up by a rod (28) and connected to other fork-joints (31) integral with the vehicle or the caravan (1) by fork-joints (29) whose median parts (30) are used as thrusts for the fork-joints (17),(18).

7. Hood according to claim 1, characterized in that the locking arm (13) of the framework is formed by two linked parts, one of them being coupled to a fork-joint (17), whereas the other is supported by a telescopic brace (22a), (22b) with pawl (25) coupled to another fork-joint (18) by a linked part (24).

**Patentansprüche**

1. Automatische Schirmdach für Gebrauchsfahrzeuge oder Wohnwagen (1) bestehend aus eine ausschwenkbare armatur die mit eine schirmdachgewebe (32) bekleidet ist, und zweige (10) bis (14) enthält, die sich strahlig von einen der höheren Winkel des Fahrzeugs oder der Wohnwagen (1) an ausstrecken und geignet sind in einen Gapäckraum (2) angelockt zu sein, der druch einen Gelenk (3) ausschwenkbar am entgegengesetzten Winkel, nach Wiederfalten der Zweigen (10) bis (14) gegen eine der seitlichen Fläche des Fahrzeugs oder der Wohnwagen (1) ist, dadurch gekennzeichnet dasseine (13) der Armaturzweigen in entfalteter Lage des Schirmdach, gegen eine seitliche Fläche des Fahrzeugs oder der Wohnwagen (1) mittels eine Stange (34) verriegelt ist, die sich zwischenzwei Anschläge (36) und (37) blockiert, und dass die Verbindung dieser Zweige (13) mit dem Fahrzeug oder den Wohnwagen mittels eine Schiene (38) und ein schulter (39) wasserdicht gemacht ist, die dem Gewebe (32) ausrüsten, welches gestreckt wird durch die kombinierte Wirkung von einen Federzirkel (5), (8) der den Gepäckraum (2) offen festhält, von senkrechten am Boden abgesteckten Gewebeseiten (32) und von geschitzten Teile (33) am Ende jeder Zweige (10) bis (14).

2. Schirmdach gemäss Anspruch 1, dadurch gekennzeichnet dass die Stange (34) die den Zweig (13) an der Wand des Fahrzeugs oder den Wohnwagen (1) verriegelt ist ausschwenkbar in einen Gelenk (35) gesamt mit dieser Wand, während der erste Anschlag (36) und ein als zweite Anschlag dienender Finger (37) die Stange (34) überlappen und an der untere Fläche des verriegelbaren Zweig (13) de Armatur verbötet sind.

3. Schirmdach gemäss Anspruch 1, dadurch gekennzeichnet dass die Schiene (38) deckt der Armaturzweig (13) und ist mit einen Hisstaw (40), (41) genäht an der geschmeidigen schulter (39) der dem Schirmdachgewebe ausrüstet verbunden, während einen Ganzes Schiene (42) und Rinne (43) zur Ausrüstung der seitlich höherer Rand des Fahrzeugs oder der Wohnwagen (1) die Wasserdichtheit der Verbindung vollendet.

4. Schirmdach gëmass Anspruch 1, dadurch gekennzeichnet dass der Federzirkel der den Gepäckraum (2) offen festhält, hat einen ausschwenkaren Winkelzweig (8) an einen Gabelgelenk (9) gesamt mit der Innere des Gepäckraum (2) und eine andere Teleskopzweig (5) ausschwenkbar an einen Gabelgelenk (7) gesamt mit der seitlicher Wand des Fahrzeugs oder der Wohnwagen (1) und bildet damit einen Spannungsmittel des Gewebes (32).

5. Schirmdach gemäss Anspruch 1, dadurch gekennzeichnet dass das am jede der zweige (10) bis (14) befestigte schirmdachgewebe (32) das in seukrechten Gewebeseiten wieder fällt, eine Fläche bedeckt die in einen 270° Kreisbogen eingeschrieben ist.

6. Schirmdach gemäss Anspruch 1, dadurch gekennzeichnet dass die Zweigen (10) bis (14) der Armatur sind ausschwenkbar und/oder verbötet in Gabelgelenke (17), (18) kuppelt durch eine Stange (28) und verbunden mit andere Gabelgelenke (31) gesamt mit dem Fahrzeug oder den Wohnwagen (1) durch Gabelgelenke (29) deren Mittelteile (30) als Auschlägue für die Gabelgelenke (17), (18) dienen.

7. Schirmdach gemäss Anspruch 1, dadurch gekennzeichnet dass der verriegelbare Armaturzweig (13) aus zwei ausschwenkbare Teile besteht, deren eine mit einen Gabelgelenk (17) kuppelt ist, während die andere durch eine Teleskopverstrebung (22a), (22b) mit Sperrklinke (25) durch einen ausschwenkbaren Stück (24) an einen anderen Gabelgelenk (18) kuppelt ist.

Fig.1

Fig. 2

Fig.3

0 011 041

Fig.4

Fig.5

0011041

Fig-6

Fig-7

Fig-8

Fig-9

5

Fig.10